# EUROPEAN PATENT APPLICATION

(11) **EP 2 147 805 A2**
(43) Date of publication of application: **27.01.2010**
(21) Application number: 09165501.9
(22) Date of filing: 15.07.2009
(51) Int. Cl.: B60C 9/00, B60C 15/06

(54) **Pneumatic tire**

(30) Priority: 22.07.2008 US 177221
(71) Applicant: The Goodyear Tire & Rubber Company, Akron, OH 44316-0001 (US)
(72) Inventor: Imhoff, Serge Julien Auguste, L-9184, Schrondweiler (LU); Donckels, Yves, B-5360, Natoye (BE)
(74) Representative: Kutsch, Bernd

(57) **Abstract**

A pneumatic tire includes a carcass (22), a tread (12), and a belt structure (16). The carcass (22) has at least one reinforced ply (14) and a reinforcing structure (32a, 32b, 56) for absorbing shear strain. The tread (12) is disposed radially outward of the carcass (22). The belt structure (16) is disposed radially between the carcass and the tread. The reinforcing structure (32a, 32b, 56) comprises a fabric of cords. Each cord has at least one strand of twisted polyketone yarn. The twisted polyketone yarn has a linear density from 1570 dtex to 1770 dtex and a twist level from 3 TPI to 9 TPI. The cords have a twist level from 3 TPI to 9 TPI and a twist direction opposite to a twist direction of the polyketone yarns.

## Description

### Field of the Invention

The present invention relates to a pneumatic tire, and more particularly, to a radial passenger tire, a radial runflat passenger tire, a radial light truck tire, or radial medium truck tire.

### Background of the Invention

A pneumatic tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber is located axially and radially outward, respectively, of the carcass ply.

Under conditions of severe operation, as with runflat and truck tires, the flexure and heating in the bead region can be especially problematic, leading to separation of mutually adjacent components that have disparate properties, such as the respective moduli of elasticity. In particular, the ply turnup ends may be prone to separation from adjacent structural elements of the tire.

A conventional ply may be reinforced with materials such as nylon, polyester, rayon, and/or metal, which have much greater stiffness (i.e., modulus of elasticity) than the adjacent rubber compounds of which the bulk of the tire is made. The difference in elastic modulus of mutually adjacent tire elements may lead to separation when the tire is stressed and deformed during use.

A variety of structural design approaches have been used to control separation of tire elements in the bead regions of a tire. For example, one method has been to provide a "flipper" at least partially surrounding the bead and the bead filler. The flipper works as a spacer that keeps the ply from making direct contact with the inextensible beads, allowing some degree of relative motion between the ply, where it turns upward under the bead, and the respective beads. In this role as a spacer, a flipper may reduce disparities of strain on the ply and on the adjacent rubber components of the tire (e.g., the filler apex, the sidewall rubber, in the bead region, and the elastomeric portions of the ply itself).

The flipper may be made of a square woven cloth that is a textile in which each fiber, thread, or cord has a generally round cross-section. When a flipper is cured with a tire, the stiffness of the fibers/cords becomes essentially the same in any direction within the plane of the textile flipper.

In addition to the use of flippers as a means by which to reduce the tendency of a ply to separate, or as an alternative, another method that has been used involves the placement of "chippers." A chipper is a circumferentially deployed metal or fabric layer that is disposed within the bead region in the portion of the tire where the bead fits onto the wheel rim. More specifically, the chipper lies inward of the wheel rim (i.e., toward the bead) and outward (i.e., radially outward, relative to the bead viewed in cross section) of the portion of the ply that turns upward around the bead. Chippers serve to stiffen, and increase the resistance to flexure of, the adjacent rubber material, which itself is typically adjacent to the turnup ply endings.

### Summary of the Invention

The invention relates to a pneumatic tire according to claim 1.

Dependent claims refer to preferred embodiments of the invention.

One purpose of the reinforcing structure is to absorb shear strain.

In one preferred aspect of the present invention, the cord has three strands of polyketone yarns.

In another preferred aspect of the present invention, the reinforcing structure of the carcass is a flipper. The flipper preferably separates the reinforced ply from a bead of the carcass. The flipper has a shearing modulus of elasticity between that of the bead and the reinforced ply whereby the flipper acts as a strain-relieving layer between the bead and the reinforced ply. The flipper reinforces a bead area of the carcass and may also stabilize a radially inward part of a sidewall of the carcass.

In another preferred aspect of the present invention, the reinforcing structure of the carcass is a chipper. The chipper is disposed adjacent to a portion of the reinforced ply wrapped around a bead. Preferably, the chipper is disposed on an opposite side of the portion of the reinforced ply from a flipper. The chipper is disposed circumferentially about the radially inwardmost portion of the reinforced ply at a location where the reinforced ply turns up under the bead. The chipper extends radially outward. The chipper protects a portion of the reinforced ply that wraps around the bead from strain. The chipper reinforces a bead area of the carcass and stabilizes a radially inward part of a sidewall of the carcass.

In still another preferred aspect of the present invention, the fabric comprises cords having 14 EPI to 26 EPI, alternatively 16 to 20 EPI such as 20 EPI.

In yet another preferred aspect of the present invention, the polyketone yarns contain a ketone unit represented by -(CH₂CH₂-CO)- as a main repeating unit. The polyketone yarns may have been made from a polyketone solution having an intrinsic viscosity of not less than 0.5 dl/g. In still another aspect of the present invention, the polyketone yarns have a density of not less than 1.29 g/cm³, and/or an elastic modulus of not less than 200 cN/dtex, and/or a heat shrinkage of -1 % to 3%.

In yet another aspect of the present invention, the pneumatic tire is a radial runflat passenger tire.

In still another aspect of the present invention, the pneumatic tire is a radial light truck tire or a radial medium truck tire.

In still another aspect of the present invention, the chipper and/or flipper comprises cords of three strands of twisted polyketone yarn, the twisted polyketone yarns having a linear density of 1650 dtex to 1690 dtex such a 1670 dtex, and/or a twist level of 5 TPI. In this case, the cords preferably have a twist level of 5 TPI in the opposite direction.

In a yet another aspect of the present invention, the polyketone yarns have a linear density in a range from 1650 dtex to 1690 dtex, such as 1670 dtex.

### Definitions

The following definitions are controlling for the description of the present invention, unless otherwise stated.

"Apex" or "bead filler apex" means an elastomeric filler located radially above the bead core and between the ply or plies and the turnup ply or plies.

"Axial" and "Axially" mean the lines or directions that are parallel to the axis of rotation of the tire.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards, and chafers.

"Belt structure" means at least one, preferably at least two layers of plies (or belts) of parallel cords, woven or unwoven, underlying the tread. Preferably, the one or more plies of parallel cords are unanchored to the bead, guards and chafers.

"Carcass" means the tire structure apart from the belt structure, tread, undertread over the plies, but including the beads.

"Casing" means the carcass, belt structure, beads, sidewalls and all other components of the tire excepting the tread and undertread.

"Chipper" refers to a narrow band of fabric or steel cords located in the bead area.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers, with which the plies and belts are reinforced.

"Equatorial Plane" means the plane perpendicular to the tire's axis of rotation and passing through the center of its tread; or the plane containing the circumferential centerline of the tread.

"Flipper" refers to a reinforcing fabric around the bead wire for strength and to tie the bead wire in the tire body.

"Ply" means a cord-reinforced layer of rubber-coated radially deployed or otherwise parallel cords.

"Radial" and "radially" mean directions radially toward or away from the axis of rotation of the tire.

"Radial Ply Structure" means the one or more carcass plies or which at least one ply has reinforcing cords oriented at an angle of between 65 degrees and 90 degrees with respect to the equatorial plane of the tire.

"Sidewall" means that portion of a tire between the tread and the bead.

"Toe guard" refers to the circumferentially deployed elastomeric rim-contacting portion of the tire axially inward of each bead.

"Turnup end" means the portion of a carcass ply that turns upward (i.e., radially outward) from the beads about which the ply is wrapped.

### Brief Description of the Drawings

The structure, operation, and advantages of the invention will become more apparent upon contemplation of the following description taken in conjunction with the accompanying drawings, wherein:
FIG. 1 represents a schematic cross-sectional view of an example tire for use with the present invention;
FIG. 2 represents a schematic detail view of the bead region of the example tire shown in FIG. 1; and
FIG. 3 represents a schematic detail view of another bead region for use with present invention.

### Detailed Description of the Preferred Embodiment

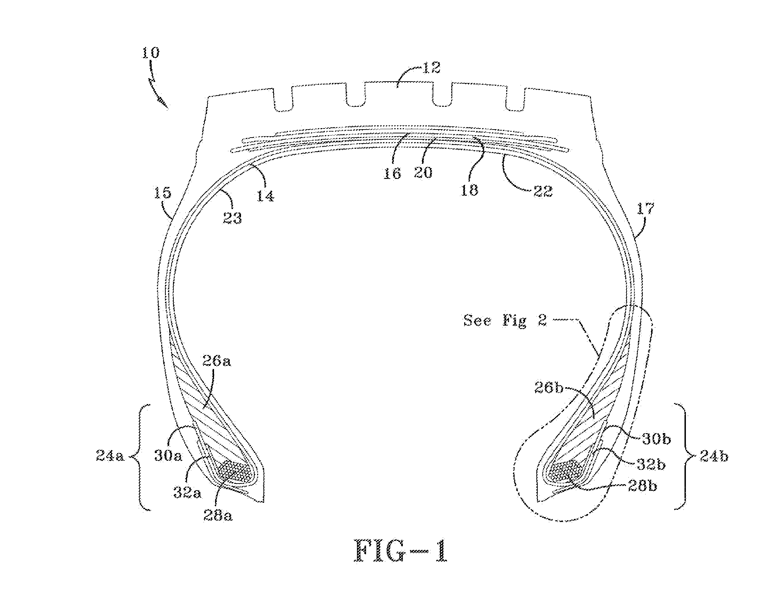

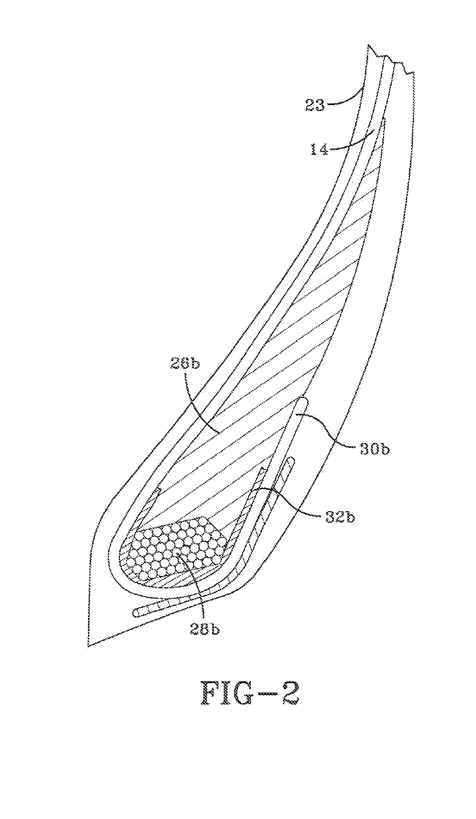

FIG. 1 shows an example tire 10 for use with reinforcing structures, such as flippers, in accordance with the present invention. The example tire 10 has a tread 12, an inner liner 23, a belt structure 16 comprising belts 18, 20, a carcass 22 with a single carcass ply 14, two sidewalls 15, 17, and two bead regions 24a, 24b comprising bead filler apexes 26a, 26b and beads 28a, 28b. The example tire 10 is suitable for mounting on a rim of a passenger vehicle or light truck. The carcass ply 14 includes a pair of axially opposite end portions 30a, 30b, each of which is secured to a respective one of the beads 28a, 28b. Each axial end portion 30a or 30b of the carcass ply 14 is turned up and around the respective bead 28a, 28b to a position sufficient to anchor each axial end portion 30a, 30b, as seen in detail in FIG. 2.

The carcass ply 14 may be a rubberized ply having a plurality of substantially parallel carcass reinforcing members made of such material as polyester, rayon, or similar suitable organic polymeric compounds. The carcass ply 14 engages the axial outer surfaces of two flippers 32a, 32b.

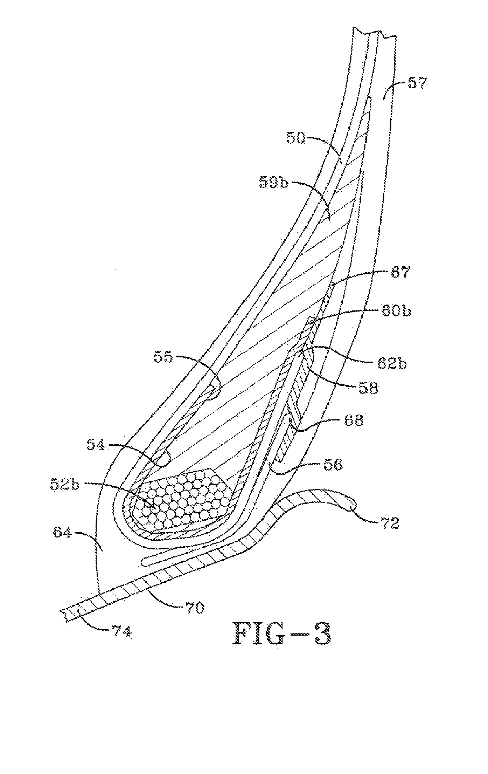

FIG. 3 shows, in cross-sectional view, the bead region of another example tire for use with reinforcing structures, such as flippers and chippers, in accordance with the present invention. A carcass ply 50 wraps around a bead 52b and is separated from the bead by a flipper 54.

The flippers 32a, 32b, 54 may be a polyketone fabric layer disposed around the bead 52b and inward of a portion of the carcass ply 50 which turns up under the bead. The polyketone fabric flipper 54 may have physical properties (such as shearing modulus of elasticity) intermediate to those of a rigid metal bead 52b and a less rigid carcass ply 50. The polyketone fabric flipper 54 therefore may serve as an active strain-relieving layer separating the bead 52b from the carcass ply 50. The carcass ply 50 may be reinforced with metal, as is conventional in the tire art.

The example tire of FIG. 3 also has a polyketone fabric chipper 56 located in the bead area for reinforcing the bead area and stabilizing the axially inward part of the sidewall 57. The flipper 54 and the chipper 56, along with a gum strip or patch 58 uniting them, are discussed separately below, and then in operational conjunction with one another.

The flipper 54 wraps around the bead 52b and extends radially outward into the sidewall regions of the example tire. The axially inward portion 55 of flipper 54 terminates within the bead-filler apex 59b. The axially outward portion 60b of the flipper 54 lies radially beyond a turnup end 62b, which itself is located radially beyond the radially outer reach of the chipper 56 (discussed separately below). The axially outward portions 62b of the turnup end 62b of the carcass ply 50 may extend radially outward 15-30 millimeters beyond the top of a wheel rim flange 72 of a wheel rim 70.

As shown in FIG. 3, the flipper 54 is deployed around the bead 52b which is itself circumferentially disposed within the example tire. An axially inward portion 55 of the flipper 54 extends radially outward from the bead 52b to a location approximately axially adjacent to the top of the wheel rim flange 72 of the wheel rim 70. On an axially outward side, the flipper 54 extends radially outward from the bead 52b to an end 60b above the wheel rim flange 72. The radially outer reach of the end 60b of the flipper 54 may extend between 7-15 millimeters beyond the radially outermost reach of the turnup end 62b. The flipper 54 may be termed "active" because it actively absorbs (i.e. during tire deflection) differential strains between the relatively rigid bead 52b and the relatively less rigid carcass ply 50.

The polyketone fabric chipper 56 is disposed adjacent to the portion of the carcass ply 50 that is wrapped around the bead 52b. More specifically, the chipper 56 is disposed on the opposite side of the portion of the carcass ply 50 from the flipper 54. The axially inward portion of the chipper 56 lies in the portion of the bead region that, when the tire is mounted on the wheel rim 70, would lie closest to a circularly cylindrical part 74 of the wheel rim. The axially and radially outward portion of the chipper 56 lies in the portion of the bead region that, when the tire is mounted on the wheel rim 70, would lie axially inward of the circular portion of the wheel rim 70, being separated from the circular portion of the wheel rim by tire rubber such as a toe guard 64.

In other words, as can be seen in FIG. 3, the chipper 56 is disposed circumferentially about the radially inward portion of the carcass ply 50 where the carcass ply turns up under the bead 52b. The chipper 56 may extend radially outward, being more or less parallel with the turned up end 62b of the carcass ply 50.

The chipper 56 protects the portion of the carcass ply 50 that wraps around the bead 52b from the strains in the rubber that separates the chipper from the wheel rim 70. The chipper 56 reinforces the bead area and stabilizes the radially inward part of the sidewall 57. In other words, the chipper 56 may absorb deformation in a way that minimizes the transmission of stress-induced shearing strains that arise inward from the wheel rim 70, through the toe guard 64, to the turned up portion 62b of the carcass ply 50, where the chipper is most immediately adjacent to the rigid bead 52b.

The patch 58 shown in FIG. 3 is circumferentially disposed about the bead 52b in such a way as to overlie the radially outermost regions 68 of the chipper 56 and the turned up ends 62b of the carcass ply 50. The patch 58 performs a function similar to that of those of the chipper 56 and the flipper 54. More specifically, the patch 58 may absorb shearing stresses in the rubber parts which might otherwise induce separation of the flexible rubber from the less flexible material of the chipper 56 and the carcass ply 50. The patch 58 may, for example, be made of nylon fabric. The radially outward portion 67 of the patch 58 may reach to a minimum level such as extending by at least 5 mm, and preferably 10-15 mm, above the upper end 60b of the flipper 54. The radially inward portion of the patch 58 may overlap 10 mm with the chipper 56.

The net effect of the incorporation of the polyketone flipper 54 and chipper 56 is to provide strain buffers that relieve or absorb differential shearing strains that otherwise, were the flippers and chippers not present, could lead to separation of the adjacent materials that have disparate shearing moduli of elasticity. Furthermore, this reinforced construction may increase durability of the tire by means of the incorporation of a smaller number of components than for standard constructions with gum strips.

In accordance with the present invention, the flippers 54 and chippers 56 of the example tires of Figs. 1 through 3 comprise polyketone fibers, such as those described in US-B- 6,818,728, which is hereby incorporated by reference into this application in its entirety. These polyketone fibers are used to form strands of yarns, which are twisted together to form a cord.

Polyketone is a high tenacity material that may advantageously replace aramid in several applications. For example, polyketone may be used in place of aramid as flippers and chippers in radial passenger runflat or standard tires and radial light or radial medium truck tires, such as the example tires of FIGS. 1-3. The breaking strength of a typical polyketone cord is 70 percent of the breaking strength of an aramid cord of the same construction. However, a reduction of twist in a polyketone cord may compensate for some or all of this strength difference, without severely affecting other properties.

Polyketone fabric having cords of 1670/2 dtex with 8.9/8.9 TPI (twists per inch) or lower and 16-26 EPI (ends per inch) has been found to provide unique and useful properties, as well as cost savings, for flippers and chippers. The below table compares several other polyketone constructions and a comparable aramid construction. The tables list properties of single end dipped 1670 dtex/1/3 cords of an aramid with a 6.9/6.9 twist construction (cord twist of 6.9 twists per inch/yarn twist of 6.9 twists per inch), a 1670 dtex/1/3 cord of polyketone yarns with a 6.9/6.9 twist construction, a 1670 dtex/1/3 cord of polyketone yarns with a 5.0/5.0 twist construction (cord twist of 5.0 twists per inch/yarn twist of 5.0 twists per inch), and a 1670 dtex/1/3 cord of polyketone yarns with a 3.0/3.0 twist construction.

| **Material** | **Aramid** | | **Polyketone** | | **Polyketone** | | **Polyketone** | |
|---|---|---|---|---|---|---|---|---|
| **Construction (dtex/1/3)** | **1670/1/3** | | **1670/1/3** | | **1670/1/3** | | **1670/1/3** | |
| **Twist Z** | **6.9** | | **6.9** | | **5.0** | | **3.0** | |
| **Twist S** | **6.9** | | **6.9** | | **5.0** | | **3.0** | |

| | | Std. | | Std. | | Std. | | Std. |
|---|---|---|---|---|---|---|---|---|
| | Average | Dev. | Average | Dev. | Average | Dev. | Average | Dev. |
| **YARN** | | | | | | | | |
| Breaking Strength (N) | 318.9 | 8.6 | 305.4 | 5.1 | | | | |
| Elongation at break (%) | 3.9 | 0.0 | 6.2 | 0.2 | | | | |

| **DIPPED** | | | | | | | | |
|---|---|---|---|---|---|---|---|---|
| Breaking Strength (N) | 860.3 | 9.9 | 612.3 | 8.4 | 742.2 | 11.5 | 836.5 | 8.4 |
| Elongation at break (%) | 6.3 | 0.0 | 7.5 | 0.2 | 6.6 | 0.2 | 6.1 | 0.2 |
| Lase @ 1% (N) | 89.6 | 3.8 | 51.9 | 2.1 | 60.0 | 1.4 | 74.5 | 3.7 |
| Lase @ 3% (N) | 318.8 | 5.7 | 194.7 | 6.0 | 279.7 | 5.7 | 365.0 | 8.4 |

| **ADHESION** | | | | | | | | |
|---|---|---|---|---|---|---|---|---|
| Static Strip Adhesion | 161.2 | 5.1 | 220.7 | 2.9 | 247.0 | 5.2 | 236.6 | 14.4 |
| (N)-RT | | | | | | | | |

| **FATIGUE** | | | | | | | | |
|---|---|---|---|---|---|---|---|---|
| Breaking Strength | 34 | | 62 | | 40 | | 40 | |
| Retained after 2h (%) | | | | | | | | |

The strength of the single end dipped 6.9/6.9-twist polyketone cord is 72 percent of the aramid strength (612.3N/860.3N). As expected, the strength increases with decreasing twist-level, which results in a strength near the strength of the aramid for the 3/3-construction (836.5N/860.3N). The comparison of the dipped cord load at specified elongation, or Lase, values indicates that the 1 percent Lase of the aramid cord is higher than that of any of the polyketone cord constructions. However, the 3 percent Lase (Load at Specific Elongation) of the dipped aramid cord is between the values of the 3/3 and the 5/5-dipped polyketone cords (318.8N between 365.0N and 279.7N).

Adhesion test samples were prepared by a standard peel adhesion test on 2.54 mm wide specimens. Strip adhesion samples were made by plying up a layer of fabric with both sides coated with 0.30 mm rubber coat compound to make a rubberized fabric, followed by preparation of a sandwich of two layers of the rubberized fabric separated by a mylar window sheet. The sandwich was cured for 20 min at 150°C and 2.54 mm samples were cut centered on each window in the mylar. The cured samples were then tested for adhesion between the rubberized fabrics in the area defined by the mylar window by a 180° pull on a test apparatus. Parallel samples were cured using the indicated cure cycles. Cured samples were then tested for adhesion at the indicated test conditions. A standard production compound was used for testing. The comparison of the strip adhesion force values shows that all three investigated polyketone constructions show a clearly superior adhesion behavior compared to aramid.

Fatigue test samples were prepared by curing a pad of rubber compound in which the cords were integrated. The cured samples were then cut into 25.4 mm wide strips parallel to the cords. The samples were flexed for 2 hours in a "shoeshine" test applying a load of 355.9 N. The cords were then removed from the rubber strips. The retained strength of the flexed cords was compared to the original strength of the cord prior to flexing. Values of the retained strength were reported in percent of the strength of the cords prior to flexing. The analysis of the fatigue properties shows that polyketone cords exhibit a superior fatigue performance compared to aramid cords of the same construction.

Lowering of polyketone twist levels leads to a decrease of fatigue performance. However, polyketone cords of 5/5 and 3/3 constructions have comparable fatigue performance as aramid cords of 6.9/6.9 construction. Therefore, it is feasible to partially compensate for the lower strength of polyketone compared to aramid by reduction of the polyketone twist level.

Further, polyketone cords may be processed with a standard Resorcinol-Formaldehyde Latex (RFL) adhesive to reach the same adhesion level as aramid cords, which require the use of additional adhesion promoters, such as epoxy components in the adhesive, in order to assure a satisfactory level of adhesion. Thus, a cheaper and more environmentally friendly dip formulation (i.e., RFL without epoxy) may be used.

One example of polyketone fibers for use with the present invention are fibers containing a ketone unit shown by the below formula as a main repeating unit. The polyketone fibers are made from a polyketone solution having an intrinsic viscosity of not less than 0.5 dl/g, exhibiting a crystal orientation of not less than 90 percent, a density of not less than 1.29 g/cm³ (alternately between 1.29 to 1.31 g/cm³), an elastic modulus of not less than 200 cN/dtex, and a heat shrinkage of -1 percent to 3 percent (alternately 0.1 percent to 1.5 percent). 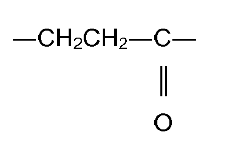 Further, these example polyketone fibers may be produced by wet spinning a polyketone solution having a phase separation temperature in the range of 0 to 150° Celsius. The example polyketone fibers have high strength, high elastic modulus, excellent fatigue resistance, good processability, good heat resistance, dimensional stability, and excellent adhesion properties. The example fibers are therefore suitable for the above discussed agricultural industrial and commercial tire applications.

The tires 10 shown in Figs. 1-3 may alternatively only have a flipper 54 (Figs. 1-2), only have a chipper 56 (not shown), or have both (Fig. 3). In a further alternative, the tire 10 may only have a flipper 54 comprising the twisted polyketone yarn and a chipper of a different material such as any suitable chipper material. In yet a further alternative, the tire 10 may have a chipper 56 comprising the twisted polyketone yarn and a flipper of a different material such as any suitable flipper material. Furthermore, the tire 10 may be an asymmetric tire in the sense that a flipper and/or a chipper may be disposed on only one side of the tire 10, such as the outer side of the tire when mounted on a vehicle. Further, the angle of the polyketone cords in the flipper and/or chipper may be in a range from 15 to 60 degrees, or more specifically from 30 to 55 degrees, with respect to the circumferential direction of the tire.

## Claims

1. A pneumatic tire comprising:
a carcass (22) having at least one reinforced ply (14) and a reinforcing structure (32a, 32b, 56);
a tread (12) disposed radially outward of the carcass (22); and
a belt structure (16) disposed radially between the carcass (22) and the tread (12), wherein
the reinforcing structure (32a, 32b, 56) of the carcass (22) comprises a fabric of cords, each cord having at least one strand of twisted polyketone yarn, the twisted polyketone yarns having a linear density from 1570 dtex to 1770 dtex and a twist level from 3 TPI to 9 TPI, and the cords having a twist level from 3 TPI to 9 TPI and a twist direction opposite to that of a twist direction of the polyketone yarns.

2. The pneumatic tire of claim 1 wherein the reinforcing structure of the carcass (22) is a flipper (32a, 32b).

3. The pneumatic tire of claim 2 wherein the flipper (32a, 32b) separates the reinforced ply (14) from a bead (28a, 28b) of the carcass (22).

4. The pneumatic tire of claim 2 or 3 wherein the flipper (32a, 32b) has a shearing modulus of elasticity between the shearing modulus of elasticity of the bead (28a, 28b) and the shearing modulus of elasticity of the reinforced ply (14) whereby the flipper (32a, 32b) acts as a strain-relieving layer between the bead (28a, 28b) and the reinforced ply (14).

5. The pneumatic tire of claim 1 wherein the reinforcing structure of the carcass (22) is a chipper (56).

6. The pneumatic tire of claim 5 wherein the chipper (56) is disposed adjacent to a portion of the reinforced ply (14) wrapped around a bead (28a, 28b) of the carcass (22).

7. The pneumatic tire of claim 6 wherein the chipper (56) is disposed on an opposite side of the portion of the reinforced ply (14) from a flipper.

8. The pneumatic tire of one of the claims 5 to 7 wherein the chipper (56) is disposed circumferentially about a radially inward portion of the reinforced ply (14) at a location where the reinforced ply (14) turns up under the bead (28a, 28b).

9. The pneumatic tire of claim 8 wherein the chipper (56) extends radially outward.

10. The pneumatic tire of one of the previous claims 5 to 9 wherein the chipper (56) protects a portion of the reinforced ply (14) that wraps around the bead (28a, 28b) of the carcass (22) from strain.

11. The pneumatic tire of one of the claims 5 to 10 wherein the chipper (56)reinforces a bead area (24a, 24b) of the carcass (22) and stabilizes a radially inward part of a sidewall of the carcass.

12. The pneumatic tire of one of the previous claims wherein the fabric comprises cords having 14 EPI to 26 EPI.

13. The pneumatic tire of one of the previous claims wherein the polyketone yarns have at least one of a density of not less than 1.29 g/cm³; and/or an elastic modulus of not less than 200 cN/dtex; and/or a heat shrinkage of -1 percent to 3 percent.

14. The pneumatic tire of one of the previous claims wherein the pneumatic tire is a radial runflat passenger tire, or a radial light truck tire, or a radial medium truck tire.

15. The pneumatic tire of one of the previous claims wherein each cord has three strands of twisted polyketone yarn or wherein at least one cord has three strands of polyketone yarn.
